# EUROPEAN PATENT APPLICATION

(11) **EP 4 737 030 A1**
(43) Date of publication of application: **06.05.2026**
(21) Application number: 25210012.8
(22) Date of filing: 21.10.2025
(51) Int. Cl.: B22F 3/03, B21K 1/30, B22F 5/08, B30B 15/00, B30B 3/00

(54) **APPARATUS AND METHOD FOR PRESSING METAL POWDERS TO MAKE HELICAL GEARS**

(30) Priority: 30.10.2024 IT 202400024270
(71) Applicant: SACMI COOPERATIVA MECCANICI IMOLA SOCIETA' COOPERATIVA, 40026 Imola (IT)
(72) Inventor: FOSCHI, Davide, 40026 Imola (Bologna) (IT); MEZZETTI, Mirco, 40026 Imola (Bologna) (IT); STOCCO, Marco, 40026 Imola (Bologna) (IT); ALBONETTI, Pietro, 40026 Imola (Bologna) (IT)
(74) Representative: Conti, Marco

(57) **Abstract**

An apparatus (1) for pressing metal powders to make helical gears (2) comprises: a mould (10) comprising an active zone which is operatively in contact with the metal powders and which defines a cavity for forming the gear (2); a support structure (50), including a frame (51), a mould holding ring (52), connected to the frame (51) by a ring bearing (53) to rotate about a longitudinal axis (X) and configured to receive the mould (10) removably so that the mould (10) is interchangeable with other moulds (10) to make gears (2) of different kinds, and an actuator (61) for rotating the mould holding ring (52) relative to the frame (51); an encoder (41), including a reference ring (41r) connected to the mould holding ring (52), and a sensor (41s) connected to the frame (51) and cooperating with the reference ring (41r) to detect an angular position of the reference ring (41r) around the longitudinal axis (X).

## Description

This invention relates to an apparatus for pressing metal powders to make helical gears. This invention also relates to a method for pressing metal powders to make helical gears.

Traditionally, prior art apparatuses for pressing metal powders to make helical gears comprise an upper working unit, including an upper punch, and a lower working unit, including a lower punch and a die block; these components act in conjunction to compact the metal powders inside a forming cavity. To make helical profile gears (internal or external), at least one between the upper punch, the lower punch and the die block rotates relative to the others, and at least two of these components have helical surfaces to form the corresponding helical profile of the gear, internally or externally.

Thus, during pressing of the powders, the upper punch and the lower punch move towards each other in translation along an axis while at least one of the components rotates so as form the helical profile.

Usually, once the metal powders have been compacted, the punches move apart and the lower punch can move in rotation and upwards in translation relative to the die block so as to extract the compacted product, which is thus removed from the cavity. In another configuration, the lower punch remains fixed and the die block can move in rotation and downwards in translation to perform the same function of extracting the compacted product from the cavity.

The pressing apparatuses comprise an axial movement system for moving the upper punch, the lower punch and the die block in translation relative to each other, and a rotational movement system for moving the upper punch, the lower punch and the die block in rotation relative to each other. Examples of apparatuses for pressing metal powders to make helical gears are described in patent documents US5906837 and US6440357.

Document US5906837 uses a servo-controlled movement system to actuate the axial and rotation movements of the components. Such an apparatus, however, is nevertheless unable to meet market requirements. Documents EP0773846B1, US6440357B1 and EP3466665A1 also describe examples of apparatuses for pressing metal powders; however, neither those documents are able to satisfy the market's needs.

This disclosure has for an aim to provide an apparatus and a method to overcome the above mentioned drawbacks of the prior art.

In particular, the aim of this disclosure is to provide a pressing apparatus capable of precisely controlling the relative movements between the components of the apparatus.

Another aim of this disclosure is to propose a pressing apparatus capable of reducing component wear as much as possible.

This aim is fully achieved by the apparatus and method of this disclosure as characterized in the appended claims.

In particular, the apparatus for pressing metal powders to make helical gears comprises a mould.

In an embodiment, the mould includes an upper punch. In an embodiment, the mould includes a lower punch. The upper punch is aligned with the lower punch along a longitudinal axis.

In an embodiment, the mould includes a die block. The die block is located between the upper punch and the lower punch along the longitudinal axis. The upper punch defines an upper working unit; the lower punch defines a lower working unit.

The lower punch, the upper punch and the die block extend longitudinally. The lower punch, the upper punch and the die block comprise a thread defining a helical profile corresponding to the profile of the gear to be made.

The upper punch and the lower punch are mutually movable in translation along the longitudinal axis. It is noted that the expression "mutually movable" may apply to the case where only one between the upper punch and the lower punch moves along the longitudinal axis, as well as to the case where both the upper punch and the lower punch move along the longitudinal axis. Preferably, the upper punch and the lower punch are each movable in translation along the longitudinal axis. The upper punch and the lower punch are movable between a spaced position away from the die block, an engagement position, where the punch (upper and/or lower) is in contact with the die block so that corresponding ends of their threads engage each other, and a pressing position, where it is inserted in the die block and cooperates therewith to define a forming cavity and to compact the metal powders.

The apparatus comprises a sensor system. The sensors of the sensor system are configured to detect a torsion signal. The torsion signal is representative of torsional stress which at least one between the upper punch and the lower punch is subjected to during pressing (or in any case during contact with the metal powders).

The apparatus comprises a control unit. The control unit is connected to the sensor system to receive the torsion signal detected by the sensor system.

The apparatus may comprise an actuator system, comprising actuators configured to impart relative movements (in translation and/or in rotation) between the upper punch, the lower punch and the die block. The control unit may be programmed to command the actuator system based on the torsion signal. In particular, the control unit may be programmed to command the actuator system to impart a relative rotation between the die block and the lower punch and/or the upper punch in a movement between the engaged position and the pressing position, preferably based on the torsion signal. Preferably, the control unit is programmed to control the actuators of the actuator system independently of each other.

Thus, the control unit controls the rotation between the components based on the torsional stress detected by the sensors; the rotation is applied in a precise, controlled manner, since it is based on a measurement of the torsional stress and not on a nominal value.

In particular, the apparatus comprises an axial movement system, configured to impart relative translational movements between the upper punch, the lower punch and the die block.

In particular, the apparatus comprises a rotational movement system, configured to impart relative rotational movements between the upper punch, the lower punch and the die block.

Thus, the control unit may be programmed to command the axial movement system and/or the rotational movement system, based on the torsion signal, to impart a relative rotation between the die block and the lower punch and/or the upper punch in a movement between the engaged position and the pressing position, preferably based on the torsion signal. Preferably, the control unit is programmed to control the axial movement system and the rotational movement system independently of each other.

In an example, the rotational movement system comprises a first actuator and a second actuator. The first actuator is configured to rotate the lower working unit. The second actuator is configured to rotate the upper working unit. The lower punch and the die block may be moved by the same actuator (the first actuator) or by different actuators (that is, by the fist actuator and a third actuator). In other words, the rotational movement system may comprise a third actuator which is configured to rotate the die block.

The control unit may be programmed to control the first actuator and/or the second actuator (and, if present, the third actuator) based on the torsion signal, preferably independently of each other. That way, the control unit commands the first actuator and/or the second actuator (and, if present, the third actuator) to impart a relative rotation between the die block and the lower punch and/or the upper punch in a movement between the engaged position and the pressing position, based on the torsion signal detected by the sensor system.

Preferably, the sensors (or a group of sensors) of the sensor system are extensometers. More preferably, each sensor of the sensor system comprises an extensometer.

When at the pressing position, the upper punch, the lower punch and the die block define an active zone of the mould which is operatively in contact with the metal powders. Preferably, the sensors of the sensor system (extensometers) are located in the active zone of the mould. In other words, the sensors of the sensor system are located in at least one between the upper punch, the lower punch and the die block.

In particular, the lower punch and the upper punch each comprise a body which extends longitudinally between a first end and a second end, where the second end is connected to the punch thread. The sensor system may comprise a sensor which is located on the body (in particular, on an outside surface of the body) of the lower punch and/or of the upper punch.

In an embodiment, the sensor system comprises an additional sensor. The sensor and the additional sensor are located on the body (in particular, on the outside surface of the body) of the lower punch and/or of the upper punch. The sensor and the additional sensor are disposed around the longitudinal axis. Preferably, the sensor and the additional sensor are located at the same height along the longitudinal axis. In particular, the sensor and the additional sensor are spaced from each other substantially by 180°.

When the sensor and the additional sensor are present, the control unit may be programmed to derive an average between the torsion signal detected by the sensor and the torsion signal detected by the additional sensor.

In an example, the sensor (and/or the additional sensor) comprises a support, configured to support (or house) the extensometer. The support may be removable from the body of the lower punch and/or of the upper punch. The support may be removably fastened (for example, screwed) to the body of the punch. That way, when the active zone of the mould is replaced, the support may be removed from the mould and placed in the new mould.

In particular, the support is fastened to the body of the mould in such a way that the extensometer is in contact with an outside surface of the punch. The support may be ring-shaped or arc-shaped or it may be flexible (so as to adapt to the body of the punch).

In an embodiment, the control unit is configured to keep the relative rotation between the die block and the lower punch and/or the upper punch activated for the entire movement between the engaged position and the pressing position. Alternatively or in addition, the control unit is programmed to keep the relative rotation between the die block and the lower punch and/or the upper punch activated for a first part of the movement between the engaged position and the pressing position; the control unit is programmed to disable the relative rotation for a second part of the movement, where the relative rotation is idle, between the engaged position and the pressing position. In particular, the second part of the movement follows the first part of the movement.

Thus, in a first case, the control unit is programmed to keep the relative rotation between the die block and the lower punch and/or the upper punch activated for the entire movement between the engaged position and the pressing position, based on the torsional stress trend. In a second case, the control unit is programmed to keep the relative rotation between the die block and the lower punch and/or the upper punch activated for a first part of the movement between the engaged position and the pressing position, and to disable the relative rotation for a second part of the movement between the engaged position and the pressing position, based on the torsional stress trend.

Thus, once the lower punch and/or the upper punch have entered the die block, the control unit activates the relative rotation for a first part of the movement between the engaged position and the pressing position and disables the relative rotation for a second part of the movement, following the first, where the rotation is idle. Keeping the relative rotation activated for the entire movement between the engaged position and the pressing position or for only a part of this movement allows obtaining gears with a precise helical profile. Disabling the relative rotation (allowing the component or the components to continue rotating idly) allows obtaining gears with a precise helical profile and at the same time allows wear to be reduced.

In an embodiment, the control unit is programmed to receive a torsional stress trend of the one between the die block and the lower punch and/or the upper punch. In other words, the control unit is programmed to receive a value (or a plurality of values) of torsional stress and to derive a torsional stress trend of the one between the die block and the lower punch and/or the upper punch. In an example, the control unit is programmed to control the rotational movement system based on a (detected) torsional stress trend of the one between the die block and the lower punch and/or the upper punch. The control unit may control the rotational movement system based on a value of the torsion or based on a trend of the torsion. This adjustment can be carried out by the control unit in real time.

The control unit may be programmed to compare the torsion value received with a torsion setpoint and, based on the comparison, to command the rotational movement system to impart a rotation. In particular, the control unit commands the rotational movement system to impart a rotation such as to minimize a difference between the torsion value received (detected) and the torsion setpoint.

In particular, the control unit is programmed to command the actuators of the rotational movement system so they impart a rotation (which produces torque) such as to reduce (in particular, substantially cancel) the torsional stress (that is, the torsion) on the (upper and/or lower) punch.

Thus, the apparatus produces a closed-loop control system for managing the drive torque of the upper punch and lower punch, preferably so as to reduce the torsion thereof.

In an embodiment, the control unit is programmed to command the rotational movement system (in particular, to command the actuators of the rotational movement system) to impart a rotation which is proportional to the trend of the torsional stress. Preferably, the rotation imparted is directly proportional to the trend of the torsional stress.

In an embodiment, the control unit is programmed to compare the detected torsion value with a torsional stress setpoint. In response to a detected torsion value which is greater than the torsional stress setpoint, the control unit may be programmed to generate an alarm signal.

In an embodiment, the apparatus comprises a user interface. The user interface may comprise a screen. In an example, the user interface is connected to the control unit so as to display the detected torsion values on the screen (and/or to display the trend of the torsion). The user interface may be connected to the control unit so as to display the alarm signal generated. In an example, the alarm signal is a sound signal. The user interface may comprise an audio output. The user interface may be connected to the control unit so as to receive the sound alarm signal and to reproduce it in the audio output.

In an example, the apparatus comprises a memory. The control unit may be programmed to store a torsion value (in particular, a torsion trend) in the memory, where the torsion value (the torsion trend) is obtained during a pressing cycle of the apparatus. In particular, a pressing cycle of the apparatus comprise a step of engaging in which the upper punch and/or the lower punch are at the engaged position, and a step of pressing in which the upper punch and/or the lower punch are at the pressing position. The control unit may be programmed to command the rotational movement system to impart a rotation in a pressing cycle based on a previously stored pressing cycle.

In an embodiment, the user interface is configured to receive a command signal from a user. In particular, the command signal is representative of a relative rotation to be applied between the die block and the lower punch and/or the upper punch. By interacting with the user interface, the user can enable or disable the relative rotation between the die block and the lower punch and/or the upper punch. By interacting with the user interface, the user can enable or disable the relative rotation between the die block and the lower punch and/or the upper punch.

In an embodiment, the control unit is programmed to control the rotational movement system based on a position of one between the die block and the lower punch and/or the upper punch along the longitudinal axis. Thus, the relative rotation between the components is subject to the relative axial position between the components. In particular, the control unit is programmed to control the rotational movement system of one between the die block and the lower punch and/or the upper punch based on a position of the one between the die block and the lower punch and/or the upper punch along the longitudinal axis. For example, the control unit is programmed to command the rotational movement system to impart a rotation of the lower punch based on a position of the lower punch along the longitudinal axis. The control unit may be programmed to command the rotational movement system to impart a rotation of the die block based on a position of the lower punch along the longitudinal axis.

The control unit may be programmed to receive a position of one between the die block and the lower punch and/or the upper punch along the longitudinal axis. The position along the longitudinal axis may be derived, for example, from the axial movement system (or by an actuator associated with the axial movement system) or it may be detected, for example, by a sensor system or an additional sensor system configured to detect an axial position.

In particular, the rotational movement system is configured to actuate a first rotation of the one between the die block and the lower punch and/or the upper punch, and to actuate a second rotation of the other between the die block and the lower punch and/or the upper punch. Preferably, the second rotation occurs in response to the first rotation.

Thus, the rotation of the working unit whose position along the longitudinal axis has been read commands the rotation of the other working unit.

For example, the first actuator (configured to rotate the lower working unit) receives a command signal from the control unit, responsive to a reading of an axial position of the lower working unit itself. The second actuator (configured to rotate the upper working unit) receives a command signal from the control unit, responsive to a reading of a radial position (or angular position) of the lower working unit.

For example, the control unit may be programmed to command the first actuator to impart a rotation of the lower working unit (of the die block and/or of the lower punch) responsive to a reading of an axial position of the lower working unit itself. For example, the control unit may be programmed to command the second actuator to impart a rotation of the upper working unit (of the upper punch) responsive to a reading of a radial position (or angular position) of the lower working unit. The apparatus may comprise one or more sensors (in particular, encoders) to detect an angular position of the lower working unit and/or of the upper working unit. For example, the apparatus may comprise a translational encoder, configured to detect a position of one between the upper punch and the lower punch along the longitudinal axis. The apparatus may comprise a rotational encoder, configured to detect a radial position of one between the die block, the upper punch and the lower punch around the longitudinal axis.

In an embodiment, the pressing apparatus comprises a mould. The mould includes an active zone which is operatively in contact with the metal powders and which defines a gear forming cavity. The mould may comprise an upper working unit and/or a lower working unit. The lower working unit and the upper working unit define the active zones which are operatively in contact with the metal powders. The lower working unit and the upper working unit cooperate to define the gear forming cavity.

The apparatus comprises a support structure. The support structure includes a frame. The support structure includes a mould holding ring. The mould holding ring is connected to the frame. Preferably, the mould holding ring is connected to the frame rotatably about the longitudinal axis. In particular, the mould holding ring is connected to the frame by a ring bearing to rotate about the longitudinal axis. The support structure comprises a ring bearing interposed between the frame and the mould holding ring, to allow the mould holding ring to rotate about the longitudinal axis relative to the frame.

The mould holding ring is configured to receive the mould removably so that the mould is interchangeable with other moulds to make gears of different kinds. Thus, the mould holding ring may be configured to receive the upper working unit and/or the lower working unit. In particular, the mould includes a lower half mould and an upper half mould. The lower half mould includes the lower working unit. The upper half mould includes the upper working unit. The lower half mould and the upper half mould are aligned along the longitudinal axis. At least one between the lower half mould and the upper half mould may include a support structure as described. In particular, at least one between the lower half mould and the upper half mould may comprise a ring bearing to rotate the frame and the mould holding ring relative to each other.

The support structure comprises an actuator to rotate the mould holding ring relative to the frame.

The apparatus comprises an encoder. The encoder includes a reference ring (or rotor), connected to the mould holding ring. The encoder includes a sensor (or stator), connected to the frame. The sensor cooperates with the reference ring to detect an angular position of the reference ring around the longitudinal axis. Thus, the reference ring, integral with the mould holding ring, rotates about the longitudinal axis relative to the sensor.

In particular, the mould holding ring comprises an annular seat for the reference ring. The annular seat is located, relative to a longitudinal direction, between the active zone of the mould and the bearing. Thus, the reference ring is located in proximity to the active zone of the mould. Positioning the reference ring in the annular seat in proximity to the mould allows precisely measuring the angular position of the mould relative to the fixed parts, thus inserting the mould components as precisely as possible. The annular seat of the mould holding ring preferably (directly) faces the frame of the support structure. Thus, none of the components of the apparatus is interposed between the reference ring located in the seat and the frame. The annular seat is located, relative to a direction perpendicular to the longitudinal direction, between the mould holding ring and the frame.

Preferably, the annular seat is accessible from the outside of the apparatus.

In an example, the support structure comprises a covering element. Preferably, the covering element is ring-shaped. The covering element is configured to be fastened to the mould holding ring to cover the reference ring. In particular, the covering element covers the reference ring located in the annular seat. The covering element is accessible from the outside. In particular, the covering element is accessible from the outside of the apparatus. The covering element may be removed in order to access the annular seat. That way, the reference ring can be accessed by removing the covering element, without having to remove other parts of the apparatus or without having to dismantle the mould. Additionally, the covering element and the reference ring are located in proximity to the active parts of the mould.

The detecting ring is coupled to the mould holding ring, preferably by screwing. The detecting ring is placed in the annular seat of the mould holding ring, preferably by screwing.

In an embodiment, the mould comprises an upper punch and a lower punch, aligned along the longitudinal axis, and a die block located between the upper punch and the lower punch. The upper punch and the lower punch are mutually movable along the longitudinal axis between a spaced position and a pressing position, where they cooperate to compact the metal powders inside the forming cavity. At least one between the upper punch, the lower punch and the die block are movable in rotation about the longitudinal axis.

The mould holding ring is configured to support the upper punch (upper working unit) and/or the die block and/or the lower punch (lower working unit). In particular, the upper half mould is configured to support the upper punch (the upper working unit) and the lower half mould is configured to support the lower punch (the lower working unit).

Preferably, the upper half mould and the lower half mould each comprise an annular seat for the reference ring. Preferably, the upper half mould and the lower half mould each comprise a covering element.

In an example, the bearing is an axial-radial bearing. In particular, the bearing comprises a radial race, configured to radially support the frame and the mould holding ring. The bearing comprises two axial races, configured to axially support the frame and the mould holding ring.

In an embodiment, the frame comprises a seat for housing the sensor. The seat of the frame may be accessible from the outside of the apparatus, for example through an open/close flap. To access the seat of the frame, hence the sensor, it is sufficient to access the open/close flap. It is noted that the sensor and the reference ring are located along the longitudinal axis at substantially the same height.

This disclosure also provides a method for pressing metal powders to make helical gears.

The method comprises a step of providing a mould, where the mould may be made according to one or more of the features described herein.

In particular, the mould includes an upper punch and a lower punch, aligned along the longitudinal axis, and a die block located between the upper punch and the lower punch along the longitudinal axis. The lower punch, the upper punch and the die block extend longitudinally and comprise a thread defining a helical profile corresponding to the profile of the gear to be made.

For each of both the upper punch and the lower punch, the method comprises the steps: of moving the punch in translation away from the die block along the longitudinal axis; of moving the punch in translation towards the die block along the longitudinal axis; of engaging corresponding ends of the threads of the punch and of the die block with each other; of inserting the punch into the die block to define a forming and pressing cavity to compact the metal powders.

The method comprises a step, via a sensor system, of detecting a torsion signal representative of torsional stress which at least one between the upper punch and the lower punch are subjected to during pressing.

The method may comprise a step of receiving the detected torsion signal at a control unit connected to the sensor system.

The relative movements (in translation and/or in rotation) between the lower punch, the upper punch and the die block may be carried out by an actuator system.

The method may comprise a step, via the control unit, of controlling the actuator system, based on the torsion signal, to impart a relative rotation between the die block and the lower punch and/or the upper punch in a movement between the step of engaging and the step of pressing, based on the torsion signal detected.

The method may comprise a step, via the control unit, of controlling the actuator system to impart relative translational movements to the upper punch and to the lower punch along the longitudinal axis.

In particular, the method may comprise a step of controlling an axial actuator system to impart relative translational movements to the upper punch and to the lower punch along the longitudinal axis. The method may comprise a step of controlling a rotary actuator system to impart relative rotational movements between the die block and the upper punch and/or the lower punch in a movement between the step of engaging and the step of pressing, based on the torsion signal detected.

The method may comprise a step of activating the relative rotation between the die block and the lower punch and/or the upper punch for the entire movement between the step of engaging and the step of pressing. Alternatively or in addition, the method may comprise a step of activating the relative rotation between the die block and the lower punch and/or the upper punch for a part of the movement between the step of engaging and the step of pressing, and disabling the relative rotation for a second part of the movement, where the relative rotation is idle and follows the first part of the movement, between the step of engaging and the step of pressing.

In an embodiment, the method comprises a step of receiving at the control unit a torsional stress trend of the one between the die block and the lower punch and/or the upper punch. The method may comprise a step of controlling the rotational movement system based on a torsional stress trend of the one between the die block and the lower punch and/or the upper punch. For example, the control unit commands the actuators of the rotational movement system to impart a rotation (which produces torque) such as to reduce (in particular, substantially cancel) the torsional stress. In an embodiment, the method comprises a step, via the control unit, of commanding the rotational movement system to impart a rotation which is proportional to the trend of the torsional stress. Preferably, the rotation imparted is directly proportional to the trend of the torsional stress.

In an example, the method comprises a step, via the control unit, of comparing the detected torsion value with a torsional stress setpoint. The method may comprise a step, via the control unit responsive to a detected torsion value which is greater than the torsional stress setpoint, of generating an alarm signal.

In an example, the method comprises a step of displaying the detected torsion values on a screen of a user interface. The method may comprise a step of receiving a command signal from a user at the user interface, the command signal being representative of a relative rotation to be applied between the die block and the lower punch and/or the upper punch.

The method may comprise a step of displaying the alarm signal on a screen of a user interface.

In an embodiment, the method comprises a step, via the control unit, of controlling the rotational movement system based on a position of one between the die block and the lower punch and/or the upper punch along the longitudinal axis.

The method may comprise a step of receiving a position of one between the die block and the lower punch and/or the upper punch along the longitudinal axis. There may be a step of deriving the position along the longitudinal axis, for example via the axial movement system, or there may be a step of detecting it via the sensor system or an additional sensor system configured to detect an axial position.

In particular, the step of controlling the rotational movement system comprises a first step of rotating the one between the die block and the lower punch and/or the upper punch, and a second step of rotating the other between the die block and the lower punch and/or the upper punch. Preferably, the second step occurs in response to the first step.

In an embodiment, the method comprises a step of providing a mould comprising an active zone which is operatively in contact with the metal powders and which defines a gear forming cavity. The method comprises a step of forming the gear in the forming cavity. The method may comprise a step of providing a support structure which includes a frame, a mould holding ring and an actuator. The mould holding ring is connected to the frame by a ring bearing to rotate about the longitudinal axis and is configured to receive the mould removably so that the mould is interchangeable with other moulds to make gears of different kinds. The actuator rotates the mould holding ring relative to the frame.

The method comprises a step of providing an encoder, including a reference ring, connected to the frame, and a sensor, connected to the frame. The method comprises a step, via the sensor, of detecting an angular position of the reference ring around the longitudinal axis.

The step of providing the mould may comprise providing an upper punch and a lower punch aligned along the longitudinal axis, and a die block located between the upper punch and the lower punch, where the mould holding ring is configured to support the die block and/or the lower punch. The method may comprise the steps of: mutually moving the upper punch and the lower punch away from each other along the longitudinal axis; mutually moving the upper punch and the lower punch towards each other along the longitudinal axis; mutually rotating at least one between the die block and the upper punch and/or the lower punch about the longitudinal axis; pressing the metal powders with the upper punch and the lower punch and compacting the metal powders inside the forming cavity.

These and other features will become more apparent from the following description of a preferred embodiment, illustrated by way of non-limiting example in the accompanying drawings, in which:

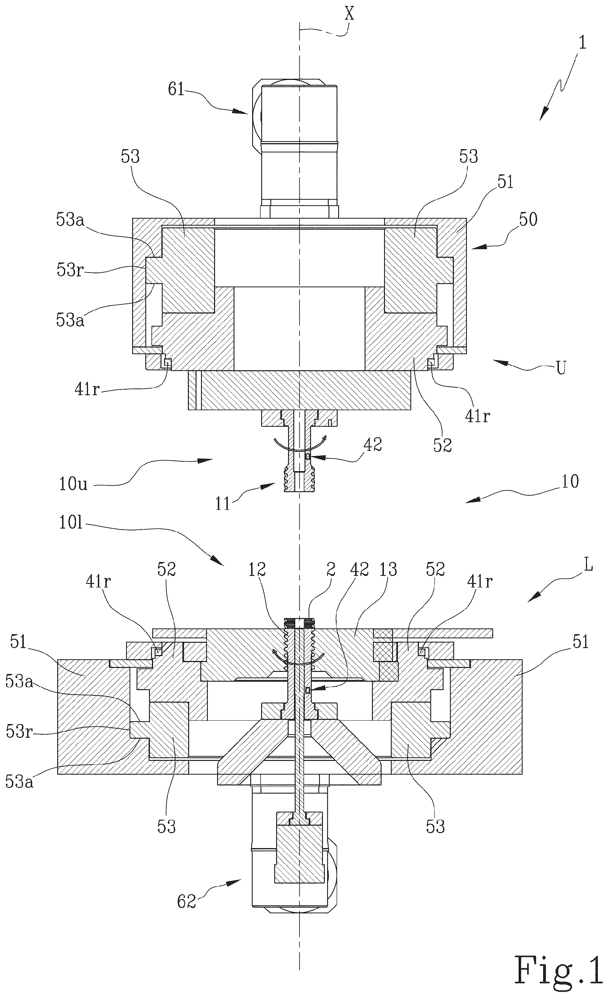

- Figure 1 shows a cross section of an apparatus 1 according to one or more aspects of this disclosure;

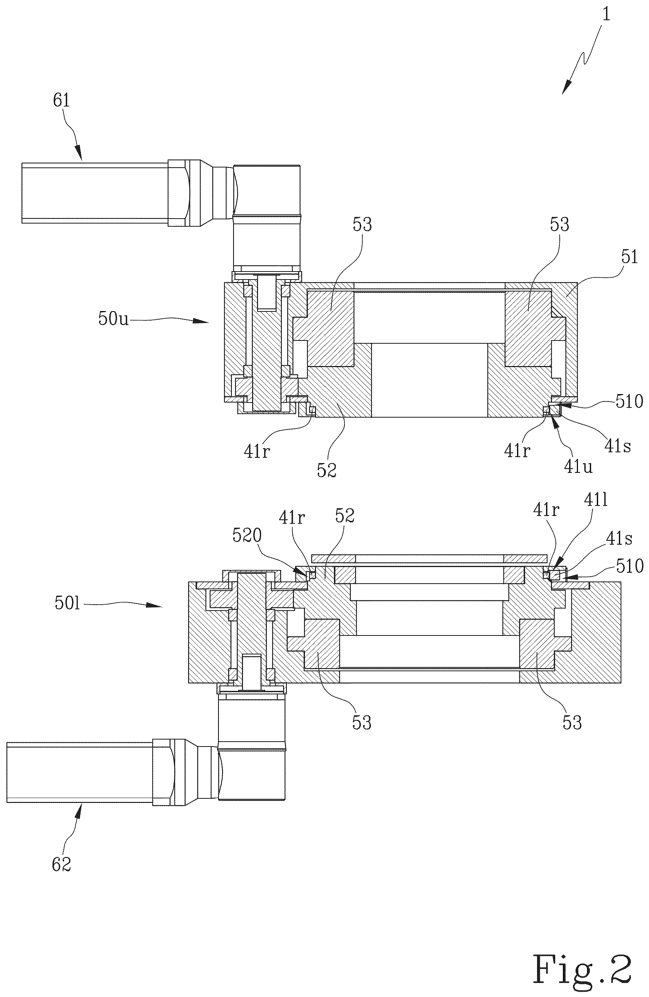

- Figure 2 shows a cross section of an apparatus 1 according to one or more aspects of this disclosure;

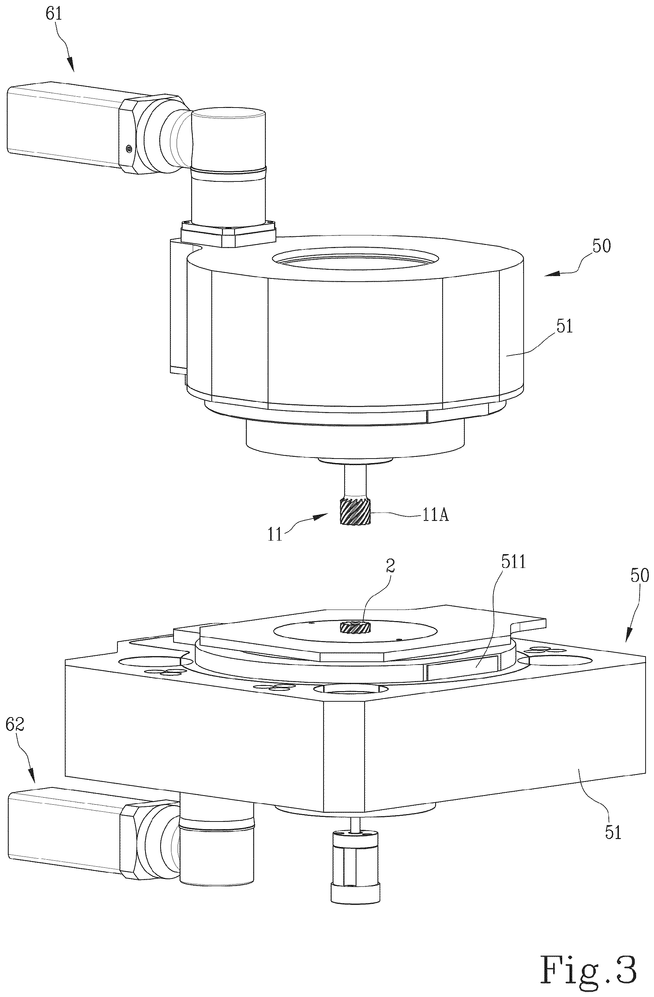

- Figure 3 shows an apparatus 1 according to one or more aspects of this disclosure;

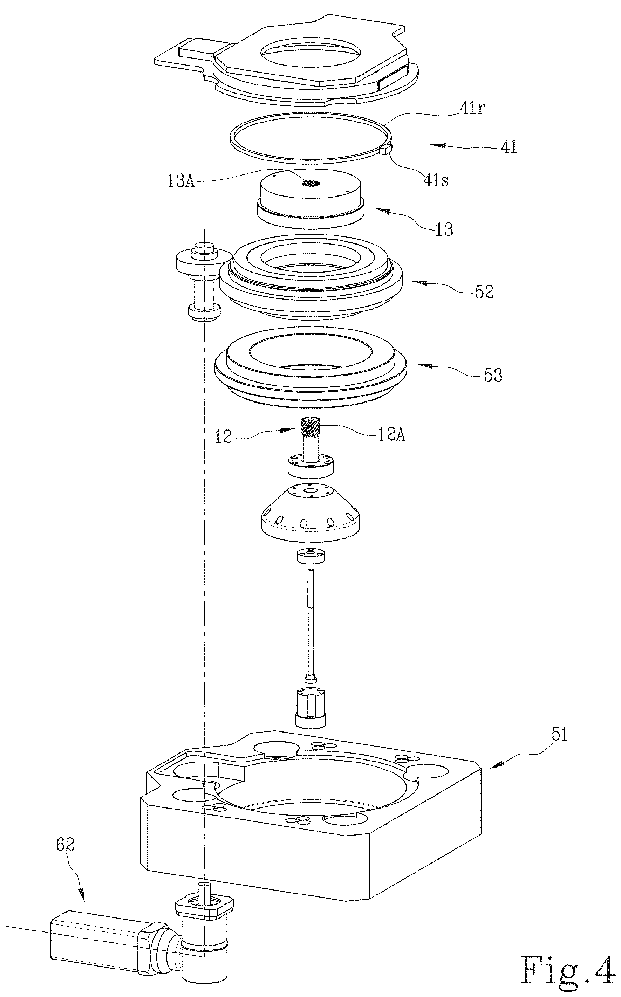

- Figure 4 shows an exploded view of an upper half mould of an apparatus 1 according to one or more aspects of this disclosure;

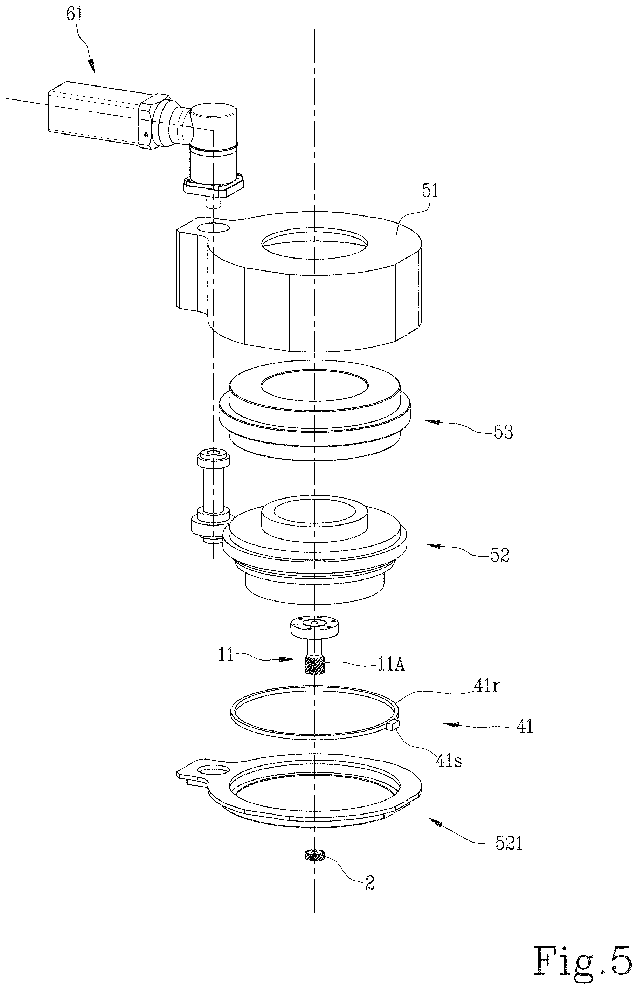

- Figure 5 shows an exploded view of a lower half mould of an apparatus 1 according to one or more aspects of this disclosure;

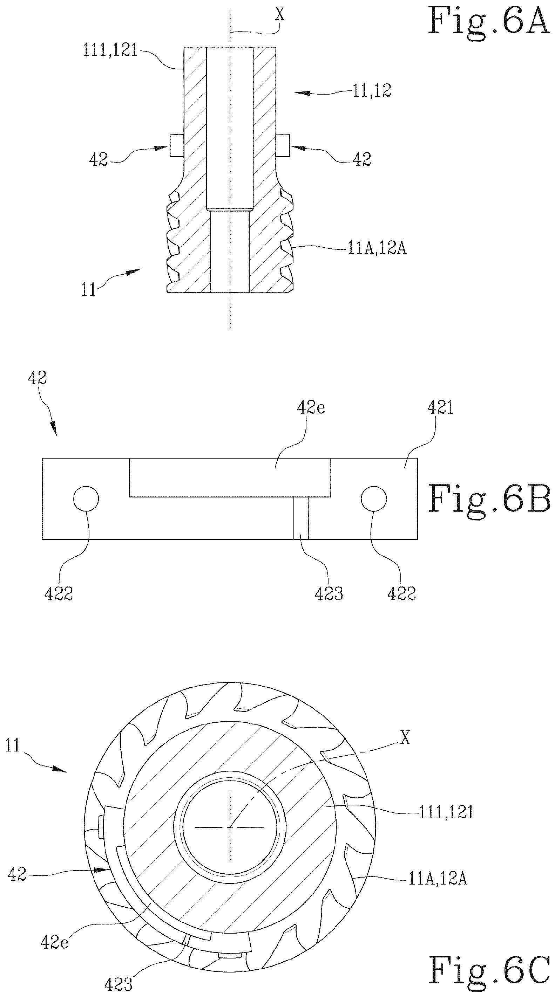

- Figure 6A shows a portion of an upper punch 11 or a lower punch 12;
- Figure 6B shows an example of a sensor 42;
- Figure 6C shows an upper punch 11 or a lower punch 12 and an example of a sensor 42.

The numeral 1 in the drawings denotes an apparatus for pressing metal powders to make helical gears 2.

The apparatus 1 comprises a mould 10. The mould 10 includes an upper punch 11 and a lower punch 12 located along a longitudinal axis X. The mould 10 includes a die block 13, located between the lower punch 12 and the upper punch 11 along the longitudinal axis X. The upper punch 11 defines an upper working unit U; the die block 13 and the lower punch 12 define a lower working unit L.

The upper punch, 11, the lower punch 12 and the die block 13 extend longitudinally and each comprise a thread 11A, 12A, 13A defining a helical profile corresponding to the profile of the gear 2 to be made. The upper punch 11 and the lower punch 12 each comprise a body 111, 121 extending longitudinally between a first end and a second end. At the second end, the body 111, 121 is connected to the thread 11A, 12A.

The upper punch 11 and the lower punch 12 are mutually movable along the longitudinal axis X. In particular, the upper punch 11 and the lower punch 12 are movable between a spaced position away from the die block 13, an engagement position, where the punch 11 and/or 12 is in contact with the die block 13 so that their corresponding ends 11A, 12A, 13A are engaged with each other, and a pressing position, where the punch 11 and/or 12 is inserted in the die block 13 so as to define a forming cavity and to compact the metal powders. One or more between the upper punch 11, the lower punch 12 and the die block 13 is mutually movable in rotation about the longitudinal axis X.

In particular, the upper punch 11 and the die block 13 (or the lower punch 12) are movable in rotation about the longitudinal axis X.

The apparatus 1 comprises a sensor system for detecting a position of the upper punch 11 and/or of the lower punch 12 along the longitudinal axis X. The apparatus 1 comprises an encoder.

The apparatus 1 comprises a sensor system for detecting a position of the upper punch 11 around the longitudinal axis X.

The apparatus 1 comprises an axial movement system for imparting mutual translational movements between the upper punch 11 and the lower punch 12. The apparatus 1 comprises a rotational movement system for imparting mutual rotational movements between the upper punch 11, the lower punch 12 and the die block 13. The rotational movement system comprises an actuator 61, in particular a first actuator 61 for rotating the upper punch 11 and a second actuator 61 for rotating the lower punch.

The apparatus 1 comprises an encoder 41 (rotational encoder), configured for detecting a (relative) radial position of the upper punch 11, of the lower punch 12 and of the die block 13 around the longitudinal axis X. The encoder 41 comprises an upper encoder 41u for detecting the radial position of the upper punch 11 around the longitudinal axis X. The encoder 41 comprises a lower encoder 41l for detecting the radial position of the lower punch 12 and/or of the die block 13 around the longitudinal axis X.

The apparatus 1 comprises an additional encoder (translational encoder), configured for detecting a (relative) axial position of the upper punch 12 and of the lower punch 11 along the longitudinal axis X.

Starting from the spaced position, the upper punch 11 and the lower punch 12 move towards each other along the longitudinal axis X. In the movement towards the engaged position, the control unit is programmed to receive (from the translational encoder) a relative axial position of the upper punch 11 and of the lower punch 12. Based on the axial position of the upper punch 11 and of the lower punch 12 at the engaged position, the control unit is programmed to control the rotational movement system so as to impart a rotation of the upper working unit U and/or of the lower working unit L. In particular, the control unit receives the axial position of the lower punch 12 at the engaged position and commands the rotation of the die block 13 (or of the lower punch 12). In the passage from the engaged position to the pressing position, the control unit commands the rotation of the lower punch 12 responsive to the rotation of the die block 13.

The apparatus 1 comprises a sensor system 42, configured for detecting a torsion signal representative of torsional stress which at least one between the upper punch 11 and the lower punch 12 is subjected to during pressing (or passing from engaged to pressing).

In particular, the sensors of the sensor system 42 each comprise an extensometer 42e.

In an example, the sensor system comprises a sensor 42 located on an outside surface of the body 111, 121 of the upper punch 11 and/or of the lower punch 12. The sensor system may comprise a pair of sensors 42 including a sensor 42 and an additional sensor 42 disposed around the longitudinal axis X substantially at 180° from each other.

In an example, the sensor 42 may comprise a support 421, configured to support the extensometer 42e. The support 421 may be ring-shaped or arc-shaped or it may be flexible so it can be fastened to the body 111, 121 of the upper punch 11 and/or of the lower punch 12. The sensor 42 may comprise a pair of threaded holes 422 at the ends of the support 421, so that it can be fastened to the body 111, 121 with screws. The sensor 42 comprises a signal cable 423 for transmitting the signal detected by the extensometer 42e. In particular, when the sensor 42 is mounted on the body 111, 121, the extensometer 42e faces towards an outside surface of the body 111, 121. In other words, the extensometer 42e is in direct contact with an outside surface of the body 111.

The control unit receives the torsion signal from the sensor system and commands the rotational movement system to impart a rotation. From the torsion signal, the control unit obtains a trend in the torsional stress in passing from the step of engaging to the step of pressing and monitors in real time the mutual rotation (between the die block 13 and the upper punch 11).

In the passage from the engaged position to the pressing position, the control unit can keep the rotational motion activated, for example, between the die block 13 and the upper punch 11 for the entire movement between the engaged position and the pressing position, or it may keep it activated for a first part of the movement between the engaged position and the pressing position and disable it for a second part of the movement between the engaged position and the pressing position so that the upper punch 11 is free to rotate idly.

The apparatus 1 comprises a support structure 50 including a frame 51 and a mould holding ring 52. The mould holding ring 52 is configured to receive the mould 10 removably so that the mould 10 can be replaced with other moulds 10 to make gears 2 of different kinds. The mould holding ring 52 is connected to the frame 51 by a ring bearing 53 to rotate about the longitudinal axis X.

The actuator 61 is configured to rotate the mould holding ring 52 relative to the frame 51.

The rotational encoder 41 comprises a reference ring 41r and a sensor 41s, cooperating with the reference ring 41r to detect an angular position of the reference ring 41r around the longitudinal axis X.

The mould holding ring 52 comprises an annular seat 520 in which the reference ring 41r is placed, for example by screwing (other types of fastenings are imaginable); the support structure 50 comprises a frame 51, a mould holding ring 52 and a ring bearing 53. The mould holding ring 52 comprises a covering element 521 which is ring-shaped and fastenable to the mould holding ring 52 to cover the reference ring 41r from the outside of the apparatus 1.

The frame 51 comprises a seat 510 for housing the sensor 41s. The seat 510 of the frame 51 is accessible from the outside through a flap 511. The mould 10 comprises an upper half mould 10u for receiving the upper working unit U and a lower half mould 10l for receiving the lower working unit L.

Thus, for each of both the upper half mould 10u and the lower half mould 10l, the support structure 50 comprises a frame 51, a mould holding ring 52, a ring bearing 53 and an actuator 61.

The ring bearing 53 comprises a radial race 53r, configured to radially support the frame 51 and the mould holding ring 52. The bearing comprises two axial races 53a, configured to axially support the frame 51 and the mould holding ring 52.

## Claims

1. An apparatus (1) for pressing metal powders to make helical gears (2), comprising:
- a mould (10) comprising an active zone which is operatively in contact with the metal powders and which defines a cavity for forming the gear (2);
- a support structure (50), including
a frame (51),
a mould holding ring (52), connected to the frame (51) by a ring bearing (53) to rotate about a longitudinal axis (X) and configured to receive the mould (10) removably so that the mould (10) is interchangeable with other moulds (10) to make gears (2) of different kinds, and
an actuator (61) for rotating the mould holding ring (52) relative to the frame (51);
- an encoder (41), including
a reference ring (41r), connected to the mould holding ring (52), and
a sensor (41s) connected to the frame (51) and cooperating with the reference ring (41r) to detect an angular position of the reference ring (41r) around the longitudinal axis (X).

2. The apparatus (1) according to claim 1, wherein the mould holding ring (52) comprises an annular seat (520) for the reference ring (51r) which, relative to a longitudinal direction, is located between the active zone of the mould (10) and the bearing (53).

3. The apparatus (1) according to claim 2, wherein the annular seat (520), which is made in the mould holding ring (52), faces the frame (51) of the support structure (50).

4. The apparatus (1) according to claim 2 or 3, wherein the annular seat (520) is accessible from the outside of the apparatus (1).

5. The apparatus (1) according to any one of the preceding claims, wherein the detecting ring (41r) is fastened to the mould holding ring (52) by screwing.

6. The apparatus (1) according to any one of the preceding claims, wherein the mould (10) comprises:
- an upper punch (11) and a lower punch (12), aligned along the longitudinal axis (X), and
- a die block (13) located between the upper punch (11) and the lower punch (12), wherein the upper punch (11) and the lower punch (12) are mutually movable along the longitudinal axis (X) between a spaced position and a pressing position, where they cooperate to compact the metal powders inside the forming cavity,
wherein at least one between the upper punch (11), the lower punch (12) and the die block (13) is movable in rotation about the longitudinal axis (X), and the mould holding ring (52) is configured to support the die block (13) and/or the lower punch (12).

7. The apparatus (1) according to any one of the preceding claims, wherein the bearing (53) is an axial-radial bearing.

8. The apparatus (1) according to claim 7, wherein the bearing (53) comprises a radial race (53r) configured to support the frame (51) and the mould holding ring (52) radially, and two axial races (53a) configured to support the frame (51) and the mould holding ring (52) axially.

9. The apparatus (1) according to any one of the preceding claims, wherein the frame (51) comprises a seat (510) for housing the sensor (41s), the seat (510) being accessible from the outside of the apparatus (1).

10. A method for pressing metal powders to make helical gears (2) comprising the following steps:
- providing a mould (10), comprising an active zone which is operatively in contact with the metal powders and which defines a cavity for forming the gear (2);
- providing a support structure (50), including a frame (51), a mould holding ring (52), connected to the frame (51) by a ring bearing (53) to rotate about a longitudinal axis (X) and configured to receive the mould (10) removably so that the mould (10) is interchangeable with other moulds (10) to make gears (2) of different kinds, and an actuator (61) for rotating the mould holding ring (52) relative to the frame (51);
- providing an encoder (41), including a reference ring (41r) connected to the mould holding ring (52), and a sensor (41s) connected to the frame (51);
- via the sensor (41s), detecting an angular position of the reference ring (41r) around the longitudinal axis (X);
- forming the gear (2) in the forming cavity.

11. The method according to claim 10, wherein the mould holding ring (52) comprises an annular seat (520) for the reference ring (41r) which, relative to a longitudinal direction, is located between the active zone of the mould (10) and the bearing (53).

12. The method according to claim 10 or 11, wherein providing the mould (10) comprises providing an upper punch (11) and a lower punch (12) aligned along the longitudinal axis (X), and a die block (13) located between the upper punch (11) and the lower punch (12), wherein the mould holding ring (52) is configured to support the die block (13) and/or the lower punch (12),
the method comprising the following steps:
- mutually moving the upper punch (11) and the lower punch (12) away from each other along the longitudinal axis (X);
- mutually moving the upper punch (11) and the lower punch (12) towards each other along the longitudinal axis (X);
- mutually rotating at least one between the die block (13) and the upper punch (11) and/or the lower punch (12) about the longitudinal axis (X);
- pressing the metal powders with the upper punch (11) and the lower punch (12) and compacting the metal powders inside the forming cavity.

13. The method according to any one of claims 10 to 12, wherein the bearing (53) is an axial-radial bearing and comprises a radial race (53r) for supporting the frame (51) and the mould holding ring (52) radially, and two axial races (53a) for supporting the frame (51) and the mould holding ring (52) axially.
